# EUROPÄISCHE PATENTSCHRIFT

(11) **EP 4 139 742 B1**
(45) Veröffentlichungstag und Bekanntmachung des Hinweises auf die Patenterteilung: **18.10.2023**
(21) Anmeldenummer: 21721826.2
(22) Anmeldetag: 14.04.2021
(51) Int. Cl.: G03B 11/04

(54) **KAMERAVERSCHLUSSVORRICHTUNG MIT PERMANENTMAGNETEN**
CAMERA SHUTTER DEVICE WITH PERMANENT MAGNETS
DISPOSITIF D'OBTURATEUR DE CAMÉRA À AIMANTS PERMANENTS

(30) Priorität: 22.04.2020 DE 102020110977
(43) Veröffentlichungstag der Anmeldung: 01.03.2023
(73) Patentinhaber: JENOPTIK Optical Systems GmbH, 07745 Jena (DE)
(72) Erfinder: SCHALLER, Uwe, 07768 Kahla (DE)
(74) Vertreter: Gleim Petri Patent- und Rechtsanwaltspartnerschaft mbB
(86) Internationale Anmeldenummer: PCT/DE2021/100343
(87) Internationale Veröffentlichungsnummer: WO 2021/213586

(56) Entgegenhaltungen:
- JP-A- 2004 309 672
- KR-A- 20090 035 139
- KR-A- 20100 127 041

## Beschreibung

Die Erfindung betrifft eine Verschlussvorrichtung für ein Kameramodul (z.B. ein IR-Kameramodul), insbesondere zur Verwendung in verschiedenen Arten von Fotografie-, Wärmebild-, Labor- und Kalibrierungsgeräten, die zur Öffnung und Schließung statische elektromagnetische Kräfte nutzt.

In der DE 11 2009 000 564 T5 ist eine Verschlussvorrichtung, insbesondere für Foto- und Laborgeräte, offenbart, bestehend aus mindestens einer Verschlusslamelle, einem mit der mindestens einen Verschlusslamelle beweglich verbundenen Permanentmagneten, sowie einem Elektromagneten, der zwischen zwei Polen einen Spalt definiert und in zwei Zustände schaltbar ist. Im ersten Zustand wird die mindestens eine Verschlusslamelle in den Spalt hineingezogen und im zweiten Zustand wird die mindestens eine Verschlusslamelle aus dem Spalt herausgestoßen. Die mindestens eine Verschlusslamelle ist schwenkbar, drehbar oder anderweitig beweglich mit einer Grundplatte verbunden. Die Grundplatte definiert eine Verschlussöffnung, durch welche Licht hindurch gelangen kann. Das Licht wird selektiv daran gehindert hindurch zu gelangen, indem die Verschlusslamelle, angetrieben durch die Bewegung des Permanentmagneten zwischen den Polen des Elektromagneten, über die Verschlussöffnung gebracht wird.

In der DE 11 2011 101 137 T5 ist eine Verschlussvorrichtung, insbesondere für Foto- und Laborgeräte, offenbart, bestehend aus einer Basis mit einem Anschlag und einer zentralen Apertur, einem Permanentmagneten, der drehbar an der Basis gelagert ist und einem Verschlussblatt, das an den Magneten montiert ist und konfiguriert ist, um sich zwischen einer offenen und einer geschlossenen Position zu bewegen, wobei jeweils eine Apertur freigelegt oder blockiert wird und der Magnet den Anschlag in der offenen und geschlossenen Position kontaktiert. Die Oberflächen des Magneten können bei oder zwischen den arbeitenden Enden eines Solenoids angeordnet sein und mit diesem kooperieren, um das Verschlussblatt zu betätigen. Dabei werden durch das Anlegen eines Stroms an einer Zylinderspule Pole ausgebildet, durch welche der Permanentmagnet angezogen bzw. abgestoßen wird und somit das Verschlussblatt oder einen Stift so lang antreibt, bis dieses den Anschlag trifft oder anderweitig kontaktiert. Die Polarität der Zylinderspule kann durch einen Treiber beliebig geändert werden, um die Apertur freizulegen bzw. zu blockieren.

In einem weiteren Ausführungsbeispiel ist der Permanentmagnet ein sich drehender Permanentmagnet in Kommunikation mit einer Basis, wobei die Drehung des Magneten begrenzt wird.

In einem weiteren Ausführungsbeispiel ist der Permanentmagnet drehbar an einem Stift montiert, der sich im Wesentlichen senkrecht zur Basis erstreckt.

Es ist bei den beiden vorgenannt offenbarten Verschlussvorrichtungen von Nachteil, dass das Verschlussblatt ausschließlich durch den Elektromagneten in offener bzw. geschlossener Position am Anschlag gehalten wird.

Aus der CN 202 748 581 U ist eine Verschlussvorrichtung für ein Kameramodul mit einem Rahmen, zwei Verschlussblättern, Permanentmagneten, Federn, zwei Lineargleitstrukturen, Elektromagneten und einer Lichttransmissionszone bekannt. Die beiden Verschlussblätter weisen jeweils zwei Gleitzylinder auf, über die sie auf den zwei zueinander parallel angeordneten Lineargleitstrukturen, die hier als Führungszylinder ausgebildet sind, zwischen zwei Stellungen geführt werden. Die Gleitzylinder an den Verschlussblättern sind Permanentmagneten. Auf den Führungszylindern ist jeweils mittig ein Elektromagnet angeordnet, der je nach Polarisierung die als Permanentmagneten ausgeführten Gleitzylinder entgegen den Federkräften der um die Führungszylinder angeordneten Druckfedern anzieht oder abstößt. Im stromfreien Zustand sind die Verschlussblätter in einer ersten Stellung, in der die Verschlussblätter die Lichttransmissionszone freigeben, am Rahmen angelegt, der als Anschlag wirkt. In der zweiten Stellung verschließen die Verschlussblätter die Lichttransmissionszone, wobei sie sich geringfügig überlappen. Die Gleitzylinder liegen unter Wirkung der Magnetkraft am Elektromagneten an.

Aus der US 2017/0371152 A1 ist ein optischer Verschluss bekannt mit einem bistabilen Aktuator, in einer kompakten Bauweise und ein auf ein Minimum reduzierten Anzahl von Bauteilen. Auf einer Grundplatte ist ein Elektromagnet montiert, mit einer Zylinderspule und einem in diesem bewegbaren Anker an dem ein Verschlussblatt angebracht ist. Das Verschlussblatt gleitet zwischen der Grundplatte und einer diese überdeckenden Deckplatte zwischen zwei durch den Hub des Ankers bestimmten zwei Endlagen, wobei in der Grundplatte und der Deckplatte zwei gleiche übereinander liegende Öffnungen vorhanden sind die entweder verschlossen oder freigegeben werden.

Nachteilig an der hier offenbarten Verschlussvorrichtung ist insbesondere, dass bei stromfreiem Elektromagneten die Verschlussblätter nur durch die Federkraft gehalten in der ersten Stellung liegen. Mechanische Erschütterungen oder Schwingungen der Vorrichtung können dazu führen, dass sich die Verschlussblätter vom Rahmen abheben und gegebenenfalls mit den Federn schwingen.

Weitere Verschlussvorrichtungen sind in JP 2004 309672 A und KR 2010 0127041 A gezeigt.

Es ist die Aufgabe der Erfindung eine Verschlussvorrichtung mit zwei Stellungen für einen Verschluss zu schaffen, in denen dieser im stromfreien Zustand der Vorrichtung kraftschlüssig stabil gehalten wird.

Diese Aufgabe wird für eine Kameraverschlussvorrichtung gelöst mit einem Gestell, das zwei sich gegenüberliegend angeordnete Träger aufweist, einer an den Trägern endenden Lineargleitstruktur und einem Verschluss, der, durch die Wirkung von Magnetkräften entlang der Lineargleitstruktur in einer Gleitrichtung mit wechselndem Richtungssinn geführt, zwischen einer ersten Stellung, in der er eine zwischen den Trägern vorhandene Transmissionszone abdeckt, und einer zweiten Stellung, in der er die Transmissionszone freigibt, springt. Der Verschluss enthält ein Verschlussblatt oder zwei Verschlussblätter.

Es ist erfindungswesentlich, dass am Verschlussblatt jeweils genau ein Gleitkörper fest angeordnet ist, der durch einen Permanentmagneten (nachfolgend zur Unterscheidung verschiebbarer Permanentmagnet genannt) gebildet ist oder einen verschiebbaren Permanentmagneten enthält und der jeweils an einer Linearführung der Lineargleitstruktur geführt ist. Den Enden der einen bzw. der zwei Linearführungen ist jeweils ein drehbarer Permanentmagnet zugeordnet, der mit einer Abtriebswelle eines Rotationsantriebs in fester Verbindung steht. Die Abtriebswelle ist zwingend nicht parallel zur Gleitrichtung ausgerichtet. Im besten Fall ist sie in einem rechten Winkel zur Gleitrichtung ausgerichtet. Die Polarisationsrichtung des drehbaren Permanentmagneten schließt einen rechten Winkel mit der Abtriebswelle ein.

Für bestimmte Anwendungen ist es von Vorteil, wenn der Verschluss genau ein Verschlussblatt enthält.

Wird der Verschluss mit zwei Verschlussblättern ausgeführt, ist es vorteilhaft, wenn die sich durch die Dopplung der Verschlussblätter ergebende Erweiterung der Vorrichtung eine spiegelbildliche Ausführung der Vorrichtung gemäß der Ausführung mit nur einem Verschlussblatt ist.

Es ist von Vorteil, wenn der drehbare Permanentmagnet an der Abtriebswelle mittelbar über einen Magnethalter verbunden ist und der Magnethalter einen radial zur Abtriebswelle verlaufenden Schlitz aufweist, in den ein zum Träger fest angeordneter Rotationsanschlag eingreift, womit die Drehbewegung des Rotationsantriebs auf 180° beschränkt ist.

Nachfolgend wird die Erfindung an Ausführungsbeispielen anhand von Zeichnungen näher erläutert. Hierzu zeigen:
Fig. 1a eine Prinzipskizze für eine Verschlussvorrichtung mit einem Verschlussblatt in einer ersten, die Transmissionszone abdeckenden Stellung,
Fig. 1b eine Prinzipskizze für eine Verschlussvorrichtung mit einem Verschlussblatt in einer zweiten, die Transmissionszone freigebenden Stellung,
Fig. 2a eine Prinzipskizze für eine Verschlussvorrichtung mit zwei Verschlussblättern in einer ersten, die Transmissionszone abdeckenden Stellung,
Fig. 2b eine Prinzipskizze für eine Verschlussvorrichtung mit zwei Verschlussblättern in einer zweiten, die Transmissionszone freigebenden Stellung,
Fig. 3a-3d verschiedene Ausführungsbeispiele für den drehbaren Permanentmagneten und dessen mittelbare Verbindung an der Abtriebswelle,
Fig. 3e eine Anordnung des Rotationsanschlages im Schlitz des Magnethalters,
Fig. 4a-4c verschiedene Ausführungsbeispiele für die Ausführung und die Verbindung des Gleitkörpers mit dem Verschlussblatt.

Eine erfindungsgemäße Verschlussvorrichtung enthält ein Gestell 1, dass zwei sich gegenüberliegend angeordnete Träger 1.1 aufweist. Zwischen den beiden Trägern 1.1 ist eine an den Trägern 1.1 jeweils endende Lineargleitstruktur 2 angeordnet und ein Verschluss 3, der, durch die Wirkung von Magnetkräften entlang der Lineargleitstruktur 2 in einer Gleitrichtung RG mit wechselndem Richtungssinn geführt, zwischen einer ersten Stellung, in der er eine zwischen den Trägern vorhandene Transmissionszone TZ abdeckt, und einer zweiten Stellung, in der er die Transmissionszone TZ freigibt, springt.

Die Lineargleitstruktur wird durch genau eine Linearführung 2.1 gebildet, wenn der Verschluss 3 nur ein Verschlussblatt 3.1 aufweist und wird durch zwei zueinander parallel angeordnete Linearführungen 2.1 gebildet, wenn der Verschluss 3 zwei Verschlussblätter 3.1 aufweist. Das Gestell 1, die Lineargleitstruktur 2 und der Verschluss 3 sind aus einem nicht magnetischen und nicht magnetisierbaren Material.

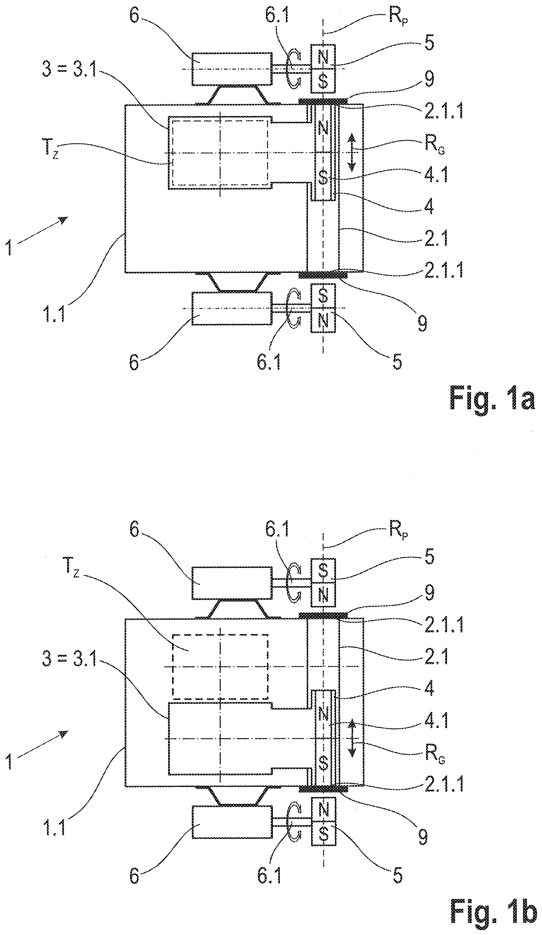

Gemäß einer ersten prinzipiellen Ausführungsform einer Verschlussvorrichtung, als Prinzipskizze in den **Fig. 1a und 1b** nicht maßstabsgerecht dargestellt, enthält der Verschluss 3 genau ein Verschlussblatt 3.1.

Das Verschlussblatt 3.1 ist etwas größer als die Transmissionszone TZ dimensioniert, sodass es auch bei groben Fertigungs- und Montagetoleranzen der Bauteile der Vorrichtung in seiner ersten Stellung die Transmissionszone TZ, siehe **Fig. 1b****,** vollständig abdeckt. An dem Verschlussblatt 3.1 ist ein Gleitkörper 4 vorhanden, der an der Linearführung 2.1 geführt ist. Der Gleitkörper ist entweder durch einen verschiebbaren Permanentmagneten 4.1 gebildet oder enthält einen verschiebbaren Permanentmagneten 4.1. Die Polarisationsrichtung des verschiebbaren Permanentmagneten 4.1 verläuft in Gleitrichtung.

Den beiden Enden 2.1.1 der Linearführung 2.1 ist jeweils ein drehbarer Permanentmagnet 5 zugeordnet. Die drehbaren Permanentmagneten 5 sind, jeweils bevorzugt mittelbar über einen Magnethalter 7 (in Fig. 1a und Fig. 1b nicht dargestellt), mit einer Abtriebswelle 6.1 eines Rotationsantriebs 6 fest verbunden. Die Abtriebswellen 6.1 der beiden Rotationsantriebe 6 sind bevorzugt in einem rechten Winkel zur Gleitrichtung RG ausgerichtet und die Polarisationsrichtungen RP der drehbaren Permanentmagneten 5 schließen jeweils einen rechten Winkel mit den jeweils mit ihnen verbundenen Abtriebsachsen ein. Abweichungen von der bevorzugten rechtwinklichen Ausrichtung der Abtriebswellen 6.1 zur Gleitrichtung RG führen zu einer geringeren Effizienz.

Zum Betreiben der Vorrichtung werden die beiden Rotationsantriebe 6 synchron oder bevorzugt zeitlich geringfügig versetzt angetrieben, so dass die beiden drehbaren Permanentmagneten 5 zeitgleich oder geringfügig zeitlich zueinander versetzt jeweils um 180° gedreht werden, wobei sie zwischen ihren beiden Stellungen wechseln. Bevorzugt wird hierzu der Drehrichtungssinn der Rotationsantriebe 6 gewechselt und die Drehung erfolgt jeweils gegen einen Rotationsanschlag 8 (in den Fig. 1a, 1b nicht dargestellt) um 180°.

Wird der Rotationsantrieb 6, dessen zugeordneter drehbarer Permanentmagnet 5 gerade den verschiebbaren Permanentmagneten 4.1 hält, etwas später angetrieben, wird die auf den verschiebbaren Permanentmagneten 4.1 wirkende Anzugskraft schneller aufgebaut, und der Rotationsantrieb 6, dessen zugeordneter drehbarer Permanentmagnet 5 der verschiebbaren Permanentmagneten 4.1 gerade hält, muss einer geringeren Haltekraft entgegen wirken.

Die beiden drehbaren Permanentmagneten 5 sind in den beiden Stellungen mit ihrer Polarisationsrichtung gegensinnig in Gleitrichtung ausgerichtet. Der verschiebbare Permanentmagnet 4.1 wird somit jeweils von einem der beiden drehbaren Permanentmagneten 5 angezogen, während er gleichzeitig von dem anderen der beiden drehbaren Permanentmagneten 5 abgestoßen wird. Ein direkter Rotationsanschlag 8 des verschiebbaren Permanentmagneten 4.1 an die drehbaren Permanentmagneten 5 wird vermieden, indem an den Trägern 1.1 jeweils das Ende der Linearführung 2.1 abdeckende, nicht magnetisierbare Prellplatten 9 vorhanden sind, die das sich jeweils zwischen einem der drehbaren Permanentmagneten 5 und dem verschiebbaren Permanentmagneten 4.1 befindliche Magnetfeld nicht beeinflussen. Das Verschlussblatt 3.1 wird auf diese Weise auch bei einem stromlosen Zustand der Vorrichtung in seinen beiden Stellungen sicher gehalten.

Eine Ausführung der Vorrichtung mit nur einem Verschlussblatt 3.1 ist insbesondere vorteilhaft für die Verwendung der Verschlussvorrichtung für einen Offset-Abgleich in einer (insbesondere thermischen) IR-Kamera (NUC, Non-Uniformity-Correction), bei dem es darauf ankommt, dass der Verschluss, welche die Lichttransmissionszone kurzzeitig für wenigstens einen Bildaufnahmezyklus verschließt, auf seiner Oberfläche eine möglichst exakt einheitliche Temperatur aufweist. Bei einem zweigeteilten Verschluss, bei dem die beiden Verschlussblätter zwangsläufig innerhalb der Vorrichtung eine unterschiedliche Relativlage zu vorhandenen Wärmequellen oder Wärmesenken haben, kann eine dadurch entstehende Temperaturdifferenz zwischen den Verschlussblättern bereits dazu führen, dass der Verschluss nicht gut für einen Offset-Abgleich nutzbar ist.

Trotzdem kann eine Ausführung mit zwei Verschlussblättern 3.1 für andere Anwendungen auch vorteilhaft sein.

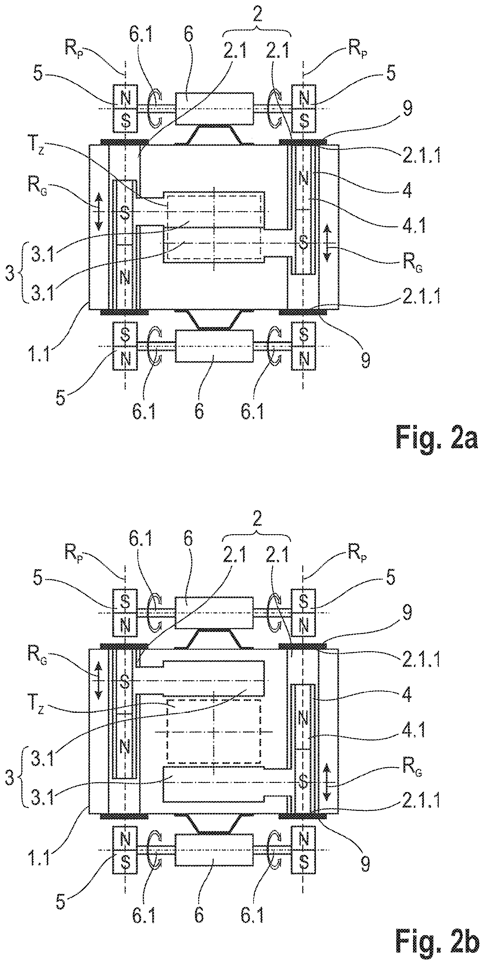

In den **Fig. 2a und 2b** ist eine zweite prinzipielle Ausführungsform einer Verschlussvorrichtung als Prinzipskizze dargestellt, bei der der Verschluss 3 zwei Verschlussblätter 3.1 enthält. Den beiden Verschlussblättern 3.1 sind jeweils eine Linearführung 2.1 und zwei drehbare Permanentmagneten 5 entsprechend der ersten Ausführung einer Vorrichtung zugeordnet. Die hier jeweils den Enden 2.1.1 an einem der Träger 1.1 zugeordneten drehbaren Permanentmagneten 5 können wie dargestellt je an einer Abtriebswelle 6.1 eines selben Rotationsantriebs 6 oder eines anderen Rotationsantriebs 6 (hier nicht dargestellt) angeordnet sein. Vorteilhaft ist die sich durch die Dopplung der Verschlussblätter 3.1 ergebende Erweiterung der Vorrichtung eine spiegelverkehrte Ausführung der Vorrichtung gemäß der Ausführung mit nur einem Verschlussblatt 3.1.

Für die aufgezeigten prinzipiellen Ausführungsformen vorteilhafte Detail-Ausführungen werden nachfolgend beschrieben. Sie sind miteinander kombinierbar und dienen alle dem Ziel einer konstruktiv einfachen Ausführung der Vorrichtung, ohne dabei hohe Ansprüche an Fertigungs- und Montagetoleranzen stellen zu müssen.

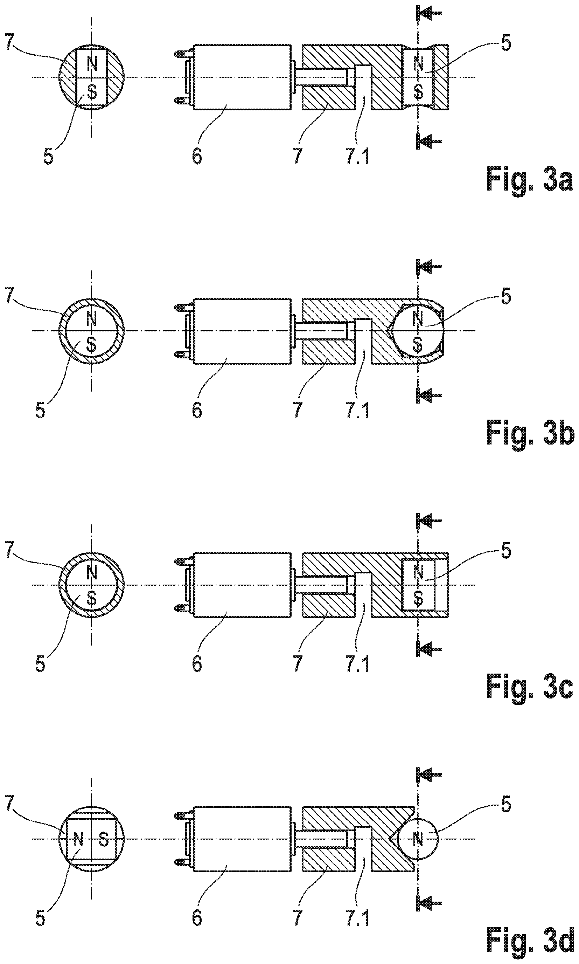

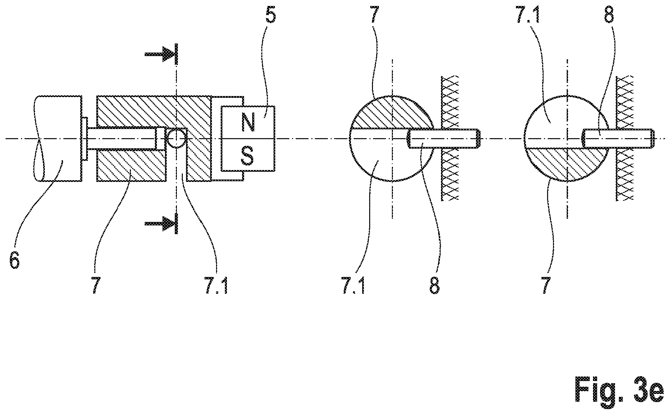

In den **Fig. 3a bis 3d** sind vier vorteilhafte Ausführungsbeispiele für den drehbaren Permanentmagneten 5 und dessen mittelbare Verbindung an der Abtriebswelle 6.1 gezeigt. In allen vier Ausführungsbeispielen ist der drehbare Permanentmagnet 5 an einem Magnethalter 7 ( nicht magnetisch) angebracht, der einen zur Abtriebswelle 6.1 radial eingebrachten Schlitz 7.1 aufweist, in den der gegenüber dem Träger 1.1 fest angeordnete Rotationsanschlag 8 eingreift. In **Fig. 3e** ist ein Schnitt durch den Magnethalter in einer im Schlitz 7.1 liegenden Ebene gezeigt. Der Magnethalter schlägt so in zwei Drehlagen, um 180° zueinander verdreht, gegen den Rotationsanschlag 8 an. In diesen beiden Drehlagen fluchtet die Polarisationsrichtung RP zur Gleitrichtung GP. Nur diese beiden Drehlagen sind als stabile Winkellagen mit der Vorrichtung einstellbar.

Bei dem in **Fig. 3a** gezeigten Ausführungsbeispiel ist der drehbare Permanentmagnet 5 ein Stabmagnet, der radial zur Abtriebswelle 6.1 in dem Magnethalter 7 fixiert ist. Nach dem Ausführungsbeispiel in **Fig. 3b** ist der Permanentmagnet ein Kugelmagnet und nach **Fig. 3c** ein Scheibenmagnet. Die Polarisationsrichtung RP liegt jeweils in einer radialen Ebene zur Abtriebswelle 6.1.In **Fig. 3d** ist eine besonders vorteilhafte Ausführung gezeigt, bei der ein Stabmagnet in eine am Magnethalter ausgebildete V-Nut eingeklebt ist. Zur besseren Darstellung wurde der drehbare Permanentmagnet in einer instabilen Zwischenlage befindet.

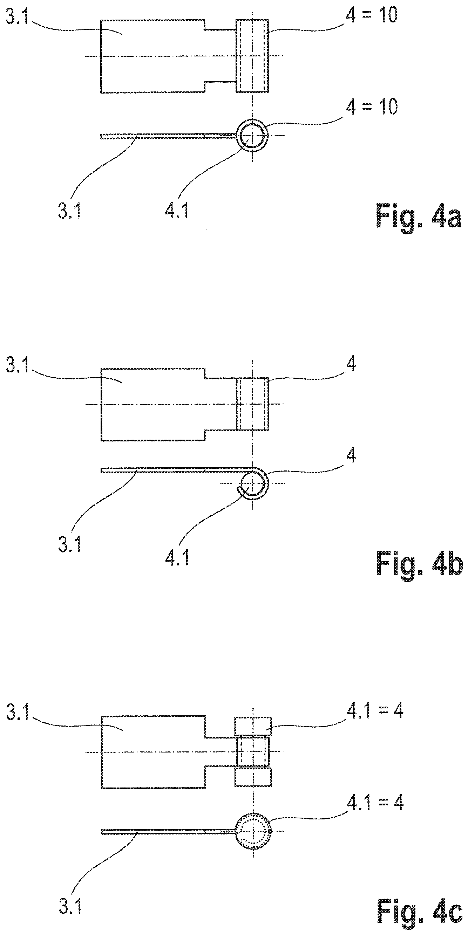

In den **Fig. 4a bis 4c** sind drei vorteilhafte Ausführungsbeispiele für die Ausführung und die Verbindung des Gleitkörpers 4 mit dem Verschlussblatt 3.1 gezeigt. In allen Ausführungsbeispielen ist der verschiebbare Permanentmagnet 4.1 ein Stabmagnet. Er ist in dem Ausführungsbeispiel gemäß **Fig. 4a** in einer den Gleitkörper 4 bildenden Hülse eingepasst, die an einer an dem Verschlussblatt 3.1 ausgebildeten Arm stoffschlüssig angebracht ist. Einfacher ist das Ausführungsbeispiel gemäß **Fig. 4b** herstellbar. Hier ist das Verschlussblatt 3.1 ohne eine einen Arm bildende Verjüngung um den verschiebbaren Permanentmagneten 4.1 gebogen, so dass dieses ihn um mehr als 180° umschließt. Der Gleitkörper 4 wird hier durch einen Teil des Verschlussblattes 3.1 gebildet. Bei dem in **Fig. 4c** gezeigten Ausführungsbeispiel bildet der verschiebbare Permanentmagnet 4.1 selbst den Gleitkörper. Er ist mittig mit einer ringförmigen Nut versehen, in der ihn ein am Verschlussblatt 3.1 ausgebildeter Arm umschlingt. Die Linearführung 2.1 weist zu diesen Ausführungsbeispielen passend einen runden oder trapezförmigen Querschnitt auf.

Alternativ zu den genannten Ausführungsbeispielen kann der als Stabmagnet ausgeführte verschiebbare Permanentmagnet eine Zentralbohrung entlang seiner Achse aufweisen und die Linearführung 2.1 ist als ein Stab ausgeführt, auf dem der verschiebbare Permanentmagnet aufgesteckt gleiten kann (nicht in den Zeichnungen dargestellt).

### Bezugszeichenliste

- 1: Gestell
- 1.1: Träger
- 2: Lineargleitstruktur
- 2.1: Linearführung
- 2.1.1: Enden der Linearführung
- 3: Verschluss
- 3.1: Verschlussblatt
- 4: Gleitkörper
- 4.1: verschiebbarer Permanentmagnet
- 5: drehbarer Permanentmagnet
- 6: Rotationsantrieb
- 6.1: Abtriebswelle
- 7: Magnethalter
- 7.1: Schlitz
- 8: Rotationsanschlag
- 9: Prellplatte

- RG: Gleitrichtung
- RP: Polarisationsrichtung
- TZ: Transmissionszone

## Patentansprüche

1. Kameraverschlussvorrichtung mit einem Gestell (1), dass zwei sich gegenüberliegend angeordnete Träger (1.1) aufweist, einer an den Trägern (1.1) endenden Lineargleitstruktur (2) und einem Verschluss (3), der, durch die Wirkung von Magnetkräften entlang der Lineargleitstruktur (2) in einer Gleitrichtung (RG) mit wechselndem Richtungssinn geführt, zwischen einer ersten Stellung, in der er eine zwischen den Trägern vorhandene Transmissionszone (TZ) abdeckt, und einer zweiten Stellung, in der er die Transmissionszone (TZ) freigibt, springt, wobei dassder Verschluss (3) ein Verschlussblatt (3.1) oder zwei Verschlussblätter (3.1) enthält, **dadurch gekennzeichnet, dass** an dem Verschlussblatt oder den Verschlussblättern jeweils genau ein Gleitkörper (4) fest angeordnet ist, der durch einen verschiebbaren Permanentmagneten (4.1) gebildet ist oder einen verschiebbaren Permanentmagneten (4.1) enthält und der jeweils an einer Linearführung (2.1) der Lineargleitstruktur (2) geführt ist, deren Enden (2.1.1) jeweils ein drehbarer Permanentmagnet (5) zugeordnet ist, der mit einer Abtriebswelle (6.1) eines Rotationsantriebs (6), die nicht parallel zur Gleitrichtung (RG) ausgerichtet ist, in fester Verbindung steht, wobei die Polarisationsrichtung (RP) des drehbaren Permanentmagneten (5) einen rechten Winkel mit der Abtriebswelle (6.1) einschließt.

2. Kameraverschlussvorrichtung nach Anspruch 1, **dadurch gekennzeichnet, dass** die Abtriebswelle (6.1) in einem rechten Winkel zur Gleitrichtung (RG) ausgerichtet ist.

3. Kameraverschlussvorrichtung nach Anspruch 1 oder 2, **dadurch gekennzeichnet, dass** der Verschluss (3) genau ein Verschlussblatt (3.1) enthält.

4. Kameraverschlussvorrichtung nach Anspruch 1 oder 2, **dadurch gekennzeichnet, dass** der Verschluss zwei Verschlussblätter (3.1) enthält und die sich durch die Dopplung der Verschlussblätter (3.1) ergebende Erweiterung der Vorrichtung eine spiegelverkehrte Ausführung der Vorrichtung gemäß der Ausführung mit nur einem Verschlussblatt (3.1) ist.

5. Kameraverschlussvorrichtung nach einem der vorhergehenden Ansprüche, **dadurch gekennzeichnet,**
**dass** der drehbare Permanentmagnet (5) an der Abtriebswelle (6.1) mittelbar über einen Magnethalter (7) verbunden ist und der Magnethalter (7) einen radial zur Abtriebswelle (6.1) verlaufenden Schlitz (7.1) aufweist, in den ein zum Träger (1.1) fest angeordneter Rotationsanschlag (8) eingreift.

## Claims

1. A camera shutter device comprising a frame (1) having two supports (1.1) arranged opposite each other, a linear sliding structure (2) terminating at the supports (1.1), and a shutter (3) which, guided by the action of magnetic forces along the linear sliding structure (2) in a sliding direction (RG) with alternating directional sense, jumps between a first position, in which it covers a transmission zone (TZ) present between the supports, and a second position, in which it clears the transmission zone (TZ), wherein the shutter (3) contains one shutter blade (3.1) or two shutter blades (3.1), **characterised in that** exactly one sliding body (4) is fixedly arranged on the shutter blade or shutter blades in each case, which sliding body (4) is formed by a displaceable permanent magnet (4.1) or contains a displaceable permanent magnet (4.1) and is guided on a linear guide (2.1) of the linear sliding structure (2) in each case, each end (2.1.1) of said linear guide (2.1) having a rotatable permanent magnet (5) assigned to it, which is firmly connected to a driven shaft (6.1) of a rotary drive (6), which driven shaft (6.1) is not aligned parallel to the sliding direction (RG), wherein the polarization direction (RP) of the rotatable permanent magnet (5) includes a right angle with the driven shaft (6.1).

2. The camera shutter device according to claim 1, **characterised in that** the driven shaft (6.1) is aligned at a right angle to the sliding direction (RG).

3. The camera shutter device according to claim 1 or 2, **characterised in that** the shutter (3) contains exactly one shutter blade (3.1).

4. The camera shutter device according to claim 1 or 2, **characterised in that** the shutter contains two shutter blades (3.1) and the extension of the device resulting from the doubling of the shutter blades (3.1) is a mirror-image design of the device according to the design with only one shutter blade (3.1).

5. The camera shutter device according to any one of the preceding claims, **characterised in that** the rotatable permanent magnet (5) is connected to the driven shaft (6.1) indirectly via a magnet holder (7) and the magnet holder (7) has a slot (7.1) extending radially to the driven shaft (6.1), in which slot (7.1) a rotation stop (8) fixed with respect to the support (1.1) engages.

## Revendications

1. Dispositif d'obturateur de caméra comprenant un châssis (1) qui présente deux supports (1.1) disposés en face l'un de l'autre, une structure de glissement linéaire (2) aboutissant aux supports (1.1) et un obturateur (3) qui, guidé par l'action de forces magnétiques le long de la structure de glissement linéaire (2) dans une direction de glissement (RG) avec un sens de direction alterné, saute entre une première position dans laquelle il recouvre une zone de transmission (TZ) présente entre les supports et une deuxième position dans laquelle il libère la zone de transmission (TZ), l'obturateur (3) comportant une feuille d'obturateur (3.1) ou deux feuilles d'obturateur (3.1), **caractérisé en ce que** sur la feuille d'obturateur ou sur les feuilles d'obturateur est disposé de manière fixe exactement un corps de glissement (4) qui est formé par un aimant permanent mobile (4.1) ou qui contient un aimant permanent mobile (4.1) et qui est guidé respectivement sur un guidage linéaire (2.1) de la structure de glissement linéaire (2) aux extrémités (2.1.1) duquel est associé à chaque fois un aimant permanent rotatif (5) qui est en liaison fixe avec un arbre de sortie (6.1) d'un entraînement rotatif (6) qui n'est pas orienté parallèlement à la direction de glissement (RG), la direction de polarisation (RP) de l'aimant permanent rotatif (5) formant un angle droit avec l'arbre de sortie (6.1).

2. Dispositif d'obturateur de caméra selon la revendication 1, **caractérisé en ce que** l'arbre de sortie (6.1) est orienté à angle droit par rapport à la direction de glissement (RG).

3. Dispositif d'obturateur de caméra selon la revendication 1 ou 2, **caractérisé en ce que** l'obturateur (3) contient exactement une feuille d'obturateur (3.1).

4. Dispositif d'obturateur de caméra selon la revendication 1 ou 2, **caractérisé en ce que** l'obturateur comprend deux feuilles d'obturateur (3.1) et l'extension du dispositif résultant du doublement des feuilles d'obturateur (3.1) est une réalisation inversée du dispositif selon la réalisation avec une seule feuille d'obturateur (3.1).

5. Dispositif d'obturateur de caméra selon l'une quelconque des revendications précédentes, **caractérisé en ce que** l'aimant permanent rotatif (5) est relié à l'arbre de sortie (6.1) indirectement par l'intermédiaire d'un support d'aimant (7) et le support d'aimant (7) présente une fente (7.1) s'étendant radialement par rapport à l'arbre de sortie (6.1), dans laquelle s'engage une butée de rotation (8) disposée fixement par rapport au support (1.1).
